# EUROPEAN PATENT APPLICATION

(11) **EP 1 533 028 A1**
(43) Date of publication of application: **25.05.2005**
(21) Application number: 03741297.0
(22) Date of filing: 09.07.2003
(51) Int. Cl.: B01J 21/06, B01D 53/94, B01J 23/58, B01J 32/00, F01N 3/28

(54) **CATALYST CARRIER AND CATALYST BODY**

(30) Priority: 09.07.2002 JP 2002200224
(71) Applicant: NGK INSULATORS, LTD., Nagoya-City, Aichi Prefecture 467-8530 (JP)
(72) Inventor: NODA, Naomi, Nagoya-shi, Aichi 467-8530 (JP); SUZUKI, Junichi, Nagoya-shi, Aichi 467-8530 (JP)
(74) Representative: Paget, Hugh Charles Edward
(86) International application number: PCT/JP2003/008713
(87) International publication number: WO 2004/004891

(57) **Abstract**

There is provided a catalyst carrier comprising ceramic substrate composed mainly of ceramics, and a pre-coat layer applied on the ceramic substrate, wherein the pre-coat layer comprises titanium oxide (TiO₂) in an amount of at least 30 mass %. Also there is provided a catalyst body comprising such a catalyst carrier, and alkali metal and/or alkaline earth metal loaded on the catalyst carrier. There are provided a catalyst carrier showing less deterioration by alkaline metal and/or alkaline earth metal to be loaded on the carrier, and a catalyst body showing less deterioration by alkaline metal and/or alkaline earth metal being loaded on the carrier.

## Description

### TECHNICAL FIELD

The present invention relates to a catalyst carrier showing less deterioration by alkaline metal and/or alkaline earth metal to be loaded on the carrier, and a catalyst body showing less deterioration by alkaline metal and/or alkaline earth metal being loaded on the carrier.

### BACKGROUND ART

In recent years, regulation for exhaust gas has become stricter and lean burn engines, direct injection engines, and the like have become widespread. In this situation, NOₓ occlusion catalyst which can effectively purify NOₓ in exhaust gas in a lean atmosphere has been put into practical use. As NOₓ occlusion components used for the NOₓ occlusion catalyst, alkali metals such as K, Na, Li, and Cs, alkaline earth metals such as Ba and Ca, rare earth metals such as La and Y, and the like are known. In particular, Ba has been widely used from the beginning of practical use of the NOₓ occlusion catalyst. The addition of K excelling in the NOₓ occlusion capability in a high temperature range has been tried in recent investigations.

The NOₓ occlusion catalyst is usually formed by loading a catalytic layer containing a NOₓ occlusion component on a carrier of an oxide-type ceramic material such as cordierite or a metallic material such as an Fe-Cr-Al alloy. There is a problem that such a carrier tends to deteriorate by being corroded with alkali metal or certain alkaline earth metal activated by exhaust gas of high temperature, particularly with Li, Na, K, or Ca. Particularly, the cordierite carrier consists of oxide-type ceramic material has a problem that the carrier may react with alkaline metal and the like to generate cracks.

### DISCLOSURE OF THE INVENTION

A catalyst carrier and a catalyst body of the present invention which can address the problem mentioned above are as follows.
[1] A catalyst carrier comprising: a ceramic substrate composed mainly of ceramics; and a pre-coat layer applied on the ceramic substrate, wherein the pre-coat layer comprises titanium oxide (TiO₂) in an amount of at least 30 mass %.
[2] The catalyst carrier according to the [1], wherein at least a part of said TiO₂ is rutile type TiO₂.
[3] The catalyst carrier according to the [2], wherein a ratio of the rutile type TiO₂ to the whole TiO₂ is at least 50 mass %.
[4] The catalyst carrier according to any of the [1] to [3], wherein an amount of the pre-coat layer per unit volume of the catalyst carrier (amount of the pre-coat layer/volume of the catalyst carrier) is 5 to 200 g/liter.
[5] The catalyst carrier according to any of the [1] to [4], wherein the ceramics is cordierite.
[6] The catalyst carrier according to any of [1] to [5], wherein the ceramic substrate is a honeycomb structure.
[7] A catalyst body comprising: the catalyst carrier according to any one of the [1] to [6]; and alkali metal and/or alkaline earth metal loaded on the catalyst carrier.

### BEST MODE FOR CARRYING OUT THE INVENTION

The catalyst carrier of the present invention has the pre-coat layer containing at least 30 mass % of titanium oxide (TiO₂) on the surface of the ceramic substrate, so that a reaction of the substrate with alkali metal and/or alkaline earth metal can be inhibited when a catalyst containing both or either of alkali metal and alkaline earth metal is loaded on the catalyst carrier. Therefore, the ceramic substrate shows less deterioration. Also, in the catalyst body of the present invention, the catalyst carrier having the pre-coat layer containing at least 30 mass % of titanium oxide (TiO₂) on the surface of the ceramic substrate is used, and catalyst containing both or either of alkali metal and alkaline earth metal is loaded on the carrier, so that it is possible to inhibit the catalyst from reacting with the ceramic substrate. Therefore, the ceramic substrate shows less deterioration.

Embodiments of the present invention are described in detail below. However, the present invention is not limited to the following embodiments. The following embodiments can variously be changed, modified, and improved based on the knowledge of a person skilled in the art without departing from the scope and spirit of the present invention.

A catalyst carrier of the present embodiment is a catalyst carrier having a pre-coat layer containing 30 (mass %) or more of titanium oxide (TiO₂) on the surface of a ceramic substrate composed mainly of ceramics.

When a catalyst containing both or either of alkaline metal and alkaline earth metal is loaded on the catalyst carrier of the present embodiment, the catalyst is inhibited from reacting with the ceramic substrate, and accordingly deterioration of the ceramic substrate is inhibited. Therefore, a content ratio of TiO₂ is less than 30 (mass %) with respect to a total mass of the pre-coat layer, an effect of inhibiting the reaction with the ceramic substrate becomes insufficient, and the ceramic substrate unfavorably easily deteriorates.

A ratio of TiO₂ contained in the pre-coat layer is preferably 70 (mass %) or more, further preferably 90 (mass %) or more, especially preferably 95 (mass %) or more. The higher the content ratio of TiO₂ is, the more the catalyst can be preferably inhibited from reacting with the ceramic substrate. When the ratio is 95 (mass %) or more, the reaction inhibiting effect is preferably developed even in a case where a large amount of alkaline metal is contained in the catalyst.

As to TiO₂ contained in the pre-coat layer, rutile type TiO₂, anatase type TiO₂, and amorphous TiO₂ may be mixed, and at least a part of is preferably rutile type TiO₂. Moreover, a ratio of the rutile type TiO₂ is preferably 50 (mass %) or more, further preferably 70 (mass %), especially preferably 90 (mass %) or more with respect to whole TiO₂. Rutile type TiO₂ easily forms a dense pre-coat film as compared with anatase type TiO₂, and can therefore effectively inhibit the alkaline metal and the like from reacting with the ceramic substrate. Since a specific surface area is generally small, a resistance to heat is high.

When rutile type TiO₂ (powder) and amorphous TiO₂ are mixed, amorphous TiO₂ functions as a binder, and particles of rutile type TiO₂ (powder) are bound and preferably densified.

Moreover, since anatase type TiO₂ causes phase transition to rutile type at high temperature, raw materials may contain anatase type TiO₂ beforehand, the phase transition to rutile type TiO₂ is caused by a thermal treatment, and accordingly a pre-coat layer containing a predetermined amount of rutile type TiO₂ may be formed. The pre-coat layer may comprise a plurality of layers, and TiO₂ having different crystal structures may be disposed in the respective layers. For example, in one of preferable embodiments of a double-layer structure, rutile type TiO₂ is mainly disposed in the layer on the side of the ceramic substrate, and anatase type TiO₂ is mainly disposed in the layer on a catalyst carrying side.

The raw material of TiO₂ contained in the pre-coat layer is preferably at least one selected from a group consisting of a Ti containing powder such as a TiO₂ powder, a Ti containing solution (preferably decomposed by the thermal treatment to form into TiO₂, and components other than TiO₂ do not remain), and a TiO₂ sol. Moreover, when TiO₂ is used, a method of producing TiO₂ may be chloride process or sulfuric acid process which are generally industrially implemented, but the chloride process is preferable in that high-purity TiO₂ can be obtained (sulfate ion remains in the sulfuric aced process).

When the TiO₂ powder is used as the raw material of TiO₂ contained in the pre-coat layer, an organic and/or inorganic binder is preferably used together. The organic binder is preferable in that materials other than TiO₂ are not left after the thermal treatment, and the inorganic binder is preferable in that the binder has a function of binding particles to thereby densify the pre-coat layer. Especially, when the TiO₂ sol is used as the inorganic binder, a TiO₂ content ratio in the pre-coat layer can be raised.

Furthermore, when the TiO₂ powder is used, an average particle diameter of the TiO₂ powder is preferably 3 (µm) or less, more preferably 1 (µm) or less, further preferably 0.5 (µm) or less. When the diameter exceeds 3 (µm), a denseness of the pre-coat layer becomes insufficient. When the diameter is set to 0.5 (µm), a sufficient denseness is obtained, even if the inorganic binder or the like is not used. The TiO₂ powder has a BET specific surface area of preferably 60 (m²/g) or less, further preferably 30 (m²/g) or less. When the area exceeds 60 (m²/g), resistance to corrosion sometimes deteriorates.

When the TiO₂ sol is used as the raw material of TiO₂ contained in the pre-coat layer, the TiO₂ sol has viscosity suitable for pre-coat, and is small particle. Therefore a merit that a dense pre-coat layer is easily formed can be obtained. This sol is preferably used together with another inorganic binder or organic binder. When the Ti containing solution is used as the raw material of TiO₂ contained in the pre-coat layer, and when the solution is wash-coated on the ceramic substrate, even the solution permeates into a fine portion of an open pore. On the other hand, an amount pre-coatable by one pre-coat operation is sometimes reduced. Therefore, the Ti containing solution is preferably mixed with the TiO₂ powder or the TiO₂ sol.

When the TiO₂ sol is used together (mixed) with a powder material such as a TiO₂ powder, a preferable content of the TiO₂ sol is such that an amount of TiO₂ in the TiO₂ sol is 0.5 to 50 parts by mass with respect to 100 parts by mass of the powder material. The amount is more preferably 1 to 40 parts by mass, particularly preferably 5 to 30 parts by mass. When the amount is less than 0.5 parts by mass, an adding effect is sometimes small. When the amount exceeds 50 parts by mass, a volumetric shrinkage by drying or thermal treatment is large, and therefore the pre-coat layer is easily cracked in some case. In this case, a complicated and time-consuming technique is required such as air conditioning drying. When the amount is 5 to 30 parts by mass, a high effect is maintained, while a drying and thermal treatment is kept in a usual method. As a component other than TiO₂ contained in the pre-coat layer, a material containing at least one type of element selected from a group consisting of Si, Al, Zr, Ce, P, W, Mg, and Fe is preferable. These elements may exist as a compound independent of a Ti compound such as oxide alone and composite oxide, or may exist as composite oxide with Ti. A mixture of composite oxide with Ti, and oxide alone may be present. For example, when Al₂O₃ is contained, resistance to corrosion which is a characteristic of Al₂O₃ can be imparted to the catalyst carrier. When the composite oxide with Ti is formed, there is a possibility that a new effective characteristic develops. A method in which mutually separate compounds are mixed and used in coating, and composite oxide is produced in a subsequent thermal treatment step, is preferable in that a dense pre-coat layer is obtained.

As the form of a material of the component other than TiO₂ contained in the pre-coat layer, a powder and a solution may be used. As to the raw material available in the form of sol such as Al₂O₃, SiO₂, ZrO₂ and the like, the sol is preferably used. This is because the sol has an appropriate viscosity and can be densified after the thermal treatment.

The component other than TiO₂ contained in the pre-coat layer may be mixed in one layer. When the pre-coat layer comprises a plurality of layers, the layers may be distributed into different layers. When the component is distributed into the different layers, one component may be contained in each layer, or a plurality of components may be contained in one layer, but the layers are preferably constituted in such a manner that the characteristic of each component is effectively developed for each layer.

A total content ratio of the alkaline metal in the pre-coat layer is preferably 0.1 (mass %) or less, further preferably 0.01 (mass %) or less with respect to the pre-coat layer. When the ratio exceeds 0.1 (mass %), the resistance to corrosion deteriorates in some case. An amount of the pre-coat layer per unit volume of the catalyst carrier (amount of the pre-coat layer/volume of the catalyst carrier) is preferably 5 to 200 g/liter. The amount is more preferably 20 to 150 g/liter, particularly preferably 60 to 100 g/liter. When the amount is less than 5 (g/liter), a pre-coating effect is sometimes insufficient. When the amount exceeds 200 (g/liter), and when a catalyst is wash-coated on the pre-coat layer, a clogging problem sometimes occurs. When the amount is set to 60 to 100 (g/liter), and even when the ceramic substrate is porous having a porosity of greater than 30%, a pre-coat layer is sufficiently formed, and pressure loss increase and thermal capacity increase by the pre-coating can be suppressed in an allowable range.

There are no specific limitations as to the form of the ceramic substrate for the catalyst carrier of the present embodiment. The above-described effect of inhibiting deterioration can be obtained by using any forms such as a monolith honeycomb, pellet, bead, ring, foam, and the like. Among them, the ceramic substrate in the form of honeycomb (honeycomb substrate) composed of a number of through-holes (cells) divided by thin partition walls gives the largest effect.

As to a material of the honeycomb substrate, the present embodiment is preferably applied to ceramics such as cordierite, mullite, alumina, and silicon carbide, as well as foil formed metal or honeycomb structured metal formed by powder metallurgy composed of heat resistant stainless steel such a Fe-Cr-Al alloy. Among them, when the carrier composed of cordierite which shows a high reactivity with Li, Na, K and Ca is taken, the effect of inhibiting deterioration becomes largest. When the substrate is porous, a pre-coating material not only forms a pre-coat layer on a cell wall surface but also enters the open pore of the substrate. However, the effect of inhibiting the reaction of the alkaline metal or the like with the substrate is not adversely affected. Conversely, the substrate is densified, and the effect is further enhanced in some case.

A shape of the through-hole (cell shape) of the honeycomb substrate may be any shapes such as a circle, a polygon, a corrugated shape. The contour of the honeycomb substrate may be formed into a desired form conforming to the inner shape of an exhaust gas system in which the honeycomb substrate is installed.

There is no particular restriction as to a cell density of the honeycomb substrate. The cell density is preferably in the range of 6 to 1500 cells/in.² (0.9 to 233 cells/cm²) for the ceramic substrate used for catalyst carrier. A thickness of the partition walls is preferably in the range of 20 to 2,000 µm. Especially, in the case of 20 to 200 µm thin walls, the alkaline metal and/or the alkaline earth metal easily diffuse from the loaded catalyst to a center of wall thickness of a honeycomb-shaped substrate, a need for the present invention is high, and the deterioration inhibiting effect is also great.

When the ceramic substrate is wash-coated with a predetermined Ti-containing material, and dried to thereby form (solidify) the pre-coat layer, the catalyst carrier of the present embodiment is obtained. At this time, a drying temperature is preferably 100 to 200°C. When the layer is sufficiently solidified at 100 to 200°C, and when there is no fear that a once held pre-coat material is not eluted in the slurry in subsequent wash-coating process of catalyst slurry, the drying only may be performed. However, to more securely solidify the pre-coat layer, after the drying, a thermal treatment for solidification is preferably performed at 600 to 1450°C. The thermal treatment temperature is further preferably 700 to 1400°C, especially preferably 900 to 1350°C. When the temperature is less than 600°C, the solidification becomes insufficient. When the temperature exceeds 1450°C, an erosion of a base material (ceramic substrate) sometimes occurs. When the temperature is 900 to 1350°C, the pre-coat layer is satisfactorily solidified, and economic efficiency is also satisfactory.

In the embodiment of the catalyst body of the present invention, a catalyst containing either or both of the alkaline metal and the alkaline earth metal, which is an NOₓ occlusion catalyst, is loaded on the catalyst carrier of the above-described embodiment. As described, the catalyst carrier having the pre-coat layer containing at least 30 mass % of titanium oxide (TiO₂) on the surface of the ceramic substrate is used, and catalyst containing both or either of alkali metal and alkaline earth metal is loaded on the carrier, so that it is possible to inhibit the catalyst from reacting with the ceramic substrate. Therefore, the catalyst body has the ceramic substrate showing less deterioration.

The present invention is effective in a case where the catalyst for use in the catalyst body of the present embodiment contains at least an alkaline metal, or a case where a 2 (mass %) or more of the alkaline metal (element base) is contained, and a remarkable effect is obtained, when the content is 10 (mass %) or more.

### EXAMPLE

### <Preparation of Coating Liquids A1 to A4>

A commercially available α alumina micro powder was added to a commercially available titanium oxide powder (chloride process, rutile type, average particle diameter: 0.6 µm, BET specific surface area: 6 m²/g), an organic binder (anion-based water-soluble polymer) and a water composite oxide were added, and mixed in a wet system in a pot mill, and coating liquids A1 to A4 were prepared. The coating liquid A1 was prepared by setting a blend ratio of the titanium oxide powder, α alumina powder, and organic binder being the titanium oxide powder (40):α alumina powder (60):organic binder (2) in accordance with a mass ratio, and adding water appropriately in such a manner as to obtain a viscosity for easily wash-coating a honeycomb carrier. Furthermore, the coating liquid A2 was prepared by setting the blend ratio of the titanium oxide powder, α alumina powder, and organic binder being titanium oxide powder (70):α alumina powder (30):organic binder (2) in accordance with the mass ratio, the coating liquid A3 was prepared by setting the ratio to the titanium oxide powder (100):organic binder (2), and the coating liquid A4 was prepared by setting the ratio to the titanium oxide powder (20):α alumina powder (80):organic binder (2).

### <Preparation of Coating Liquids B1 to B3>

A commercially available titania sol (Ishihara Sangyo Kabushiki Kaisha, commercial name: STS01), and water were added to a commercially available titanium oxide powder (chloride process, rutile type, average particle diameter: 0.6 µm, BET specific surface area: 6 m²/g), and mixed in a wet system in a pot mill, and coating liquids B1, B2, and B3 were prepared. A blend ratio of the titanium oxide powder and the titania sol in accordance with a mass ratio was set to the titanium oxide powder (100):titania sol (TiO₂ conversion, 10) for the coating liquid B1, the titanium oxide powder (100) :titania sol (TiO₂ conversion, 20) for the coating liquid B2, and the titanium oxide powder (100):titania sol (TiO₂ conversion, 40) for the coating liquid B3. Water was appropriately added to adjust the water content in such a manner as to obtain a viscosity for easily wash-coating a honeycomb carrier.

### <Preparation of Coating Liquid C>

An organic binder (anion-based water-soluble polymer), and water were added to a commercially available titanium oxide powder (sulfuric aced process, anatase type, average particle diameter: 0.15 µm, BET specific surface area: 11 m²/g), and mixed in a wet system in a pot mill, and coating liquid C was prepared. A blend ratio of the titanium oxide powder and the organic binder in accordance with a mass ratio was set to the titanium oxide powder (100): organic binder (2), and water was appropriately added to adjust the water content in such a manner as to obtain a viscosity for easily wash-coating a honeycomb carrier.

### <Preparation of Coating Liquids D1 and D2>

An organic binder and water were added to two types of commercially available titanium oxide powders (chloride process, rutile type, average particle diameter: 0.6 µm, BET specific surface area: 6 m²/g, and sulfuric aced process, anatase type, average particle diameter: 0.15 µm, BET specific surface area: 11 m²/g), and milled in a wet system in a pot mill, and coating liquids D1 and D2 were prepared. Each blend ratio in accordance with a mass ratio was set to the rutile type titanium oxide powder: anatase type titanium oxide powder: organic binder = 70:30:2 for the coating liquid D1 and 50:50:2 for the coating liquid D2, and water was appropriately added to adjust the water contents in such a manner as to obtain a viscosity for easily wash-coating a honeycomb carrier.

### <Preparation of Coating Liquid E>

An organic binder (anion-based water-soluble polymer), and water were added to a commercially available titanium oxide powder (sulfuric aced process, rutile type, average particle diameter: 0.2 µm, BET specific surface area: 10 m²/g), and milled in a wet system in a pot mill. A blend ratio of the titanium oxide powder and the organic binder was set to the titanium oxide powder (100):organic binder (2) in accordance with a mass ratio, and water was appropriately added to adjust the water content in such a manner as to obtain a viscosity for easily wash-coating a honeycomb carrier.

### <Preparation of Coating Liquid F

An alumina powder, a titanium oxide powder, a kaolin powder (Al₂O₃-2SiO₂), and a magnesite powder (MgCO₃) were mixed, water was added, the mixture was milled in a wet system in a pot mill, and coating liquid F was prepared. A blend ratio was set to the alumina powder (40):titanium oxide powder (45):kaolin powder (5):magnesite powder (10), and water was appropriately added to adjust the water content in such a manner as to obtain a viscosity for easily wash-coating a honeycomb carrier.

### <Preparation of Slurry for loading NOₓ Occlusion Catalyst>

A commercially available γAl₂O₃ powder (specific surface area: 200 m²/g) was dipped in a solution obtained by mixing an aqueous (NH₃)₂Pt(NO₂)₂ solution and an aqueous KNO₃ solution, mixed/stirred in a pot mill for two hours, thereafter, dried, milled, and fired at 600°C in an electric furnace for three hours. A commercially available alumina sol and water were added to a (Pt+K)-pre-doped γAl₂O₃ powder obtained in this manner, and milled again in a wet system in a pot mill to prepare a wash-coating slurry. An amount relation between γAl₂O₃ and Pt and K was adjusted in a mixing/immersing stage in such a manner that Pt indicated 30 g/cft (1.06 g/liter) (mass based on Pt element per honeycomb volume) and K indicated 20 (g/liter) (mass based on K element per honeycomb unit volume) in a case where the NOₓ occlusion catalyst loading amount was 150 g/liter (per honeycomb unit volume) in a stage in which the honeycomb carrier was wash-coated with the slurry and finally fired. An added amount of the alumina sol was set in such a manner that the solid content was 10 (mass %) of total Al₂O₃ in accordance with Al₂O₃ conversion, and water was appropriately added to adjust the water content in such a manner as to obtain such a viscosity that the catalyst was easily loaded.

### <Sample Preparation>

### (Example 1)

First, a cordierite honeycomb carrier (partition wall thickness: 6 mil (0.15 mm), cell density: 400 cpsi (62 cells/cm²), porosity of 30%) was dipped in the coating liquid A1. After blowing away an excess coating liquid in cells by compressed air, the carrier was dried. A loading amount was adjusted in such a manner that the amount was 70 (g/liter) (per honeycomb unit volume) after firing. When the predetermined amount of the catalyst was not loaded on the carrier upon one dip-drying operation, dipping and drying were repeated until the predetermined amount was loaded on it. The obtained dried carrier was fired at 950°C in an electric furnace for one hour. After the firing, a step of loading and drying the above-described NOₓ occlusion catalyst loading slurry (hereinafter referred to as "NOₓ occlusion catalyst slurry") on a honeycomb body was repeated as required, until the NOₓ occlusion catalyst loading amount reached 150 (g/liter) after the firing. Thereafter, the material was fired again at 600°C in the electric furnace for one hour, and an NOₓ occlusion catalyst carrier 1 was obtained (Example 1).

### (Examples 2 and 3)

NOₓ occlusion catalyst carriers 2a (coating liquid A2) and 2b (coating liquid A3) were obtained in the same manner as in Example 1 except that the coating liquid A2 or A3 was used instead of the coating liquid A1 (Examples 2, 3). (Examples 4, 5, and 6)

NOₓ occlusion catalyst carriers 3a (coating liquid B1), 3b (coating liquid B2), and 3c (coating liquid B3) were obtained in the same manner as in Example 1 except that the coating liquids B1, B2, or B3 was used instead of the coating liquid A1 (Examples 4, 5, 6).

### (Examples 7, 8, and 9)

NOₓ occlusion catalyst carriers 4a (700°C), 4b (1100°C), and 4c (1300°C) were obtained in the same manner as in Example 1 except that a firing temperature after coating a desired amount of the coating liquid A3 was set to 700°C, 1100°C, or 1300°C (Examples 7, 8, 9).

### (Examples 10 and 11)

NOₓ occlusion catalyst carriers 5a (45 g/liter) and 5b (120 g/liter) were obtained in the same manner as in Example 1 except that a coating amount of the coating liquid A3 was set to 45 g/liter (per honeycomb unit volume), and 120 g/liter (per honeycomb unit volume)(Examples 10, 11).

### (Example 12)

An NOₓ occlusion catalyst carrier 6 was obtained in the same manner as in Example 1 except that a coating liquid C was used instead of the coating liquid A1, and a firing temperature was 700°C (Example 12).

### (Examples 13 and 14)

NOₓ occlusion catalyst carriers 7a (950°C) and 7b (1100°C) were obtained in the same manner as in Example 1 except that a coating liquid C was used instead of the coating liquid A1, and a firing temperature was set to 950°C or 1100°C (Examples 13, 14).

### (Examples 15 and 16)

NOₓ occlusion catalyst carriers 8a (D1) and 8b (D2) were obtained in the same manner as in Example 1 except that a coating liquid D1 or D2 was used instead of the coating liquid A1 (Examples 15, 16).

### (Example 17)

An NOₓ occlusion catalyst carrier 9 was obtained in the same manner as in Example 1 except that a coating liquid E was used instead of the coating liquid A1 (Example 17).

### (Example 18)

An NOₓ occlusion catalyst carrier 10 was obtained in the same manner as in Example 1 except that a cordierite honeycomb carrier was dipped and held in a coating material F, a loading amount after the firing was adjusted into 70 g/liter, and the carrier was fired at 1380°C for one hour

### (Example 18).

### (Comparative Example 1)

A step of loading and drying an NOₓ occlusion catalyst slurry on the same cordierite honeycomb carrier as that used in Example 1 was repeated until an NOₓ occlusion catalyst loading amount was 150 g/liter. Thereafter, the carrier was fired at 600°C in an electric furnace for one hour, and an NOₓ occlusion catalyst carrier 11 was obtained (Comparative Example 1).

### (Comparative Example 2)

An NOₓ occlusion catalyst carrier 12 was obtained in the same manner as in Example 1 except that a coating liquid A4 was used instead of the coating liquid A1 (Comparative Example 2).

### (Durability Test)

The NOₓ occlusion catalysts (Examples 1 to 18 and Comparative Examples 1, 2) were subjected to an acceleration durability test at 850°C for 30 hours, while water of 10% water content coexisted in an electric furnace. As a reference example, the cordierite carrier on which anything was not loaded was also subjected to the acceleration durability test.

### <Evaluation of Catalyst Body (Ceramic Substrate) Deterioration Inhibition Effect>

The NOₓ occlusion catalyst bodies 1 to 10 and the NOₓ occlusion catalyst bodies 11, 12 which were comparative examples were checked for presence and degree of crack generation in the carrier after the durability test in appearance observation and micro structure observation by an electron microscope. It is to be noted that as to a crack generation state (degree), a body in which the generation of any crack was not recognized was assumed as 0, a body in which a large crack resulting in a practical problem was generated was assumed as 10, and the generation degree of the crack was evaluated in eleven stages. Furthermore, an initial transverse strength and a transverse strength after the durability test were measured, and a transverse strength drop ratio was compared/studied. A transverse strength tester was used in a transverse strength test. Measurement conditions were set to three-point bend, span of 35 mm, sample shape: 8 cells (width) × 5 cells (height) × 50 mm (length L).

The transverse strength drop ratio was obtained by the following equation:

Transverse strength drop ratio (%) = ((initial transverse strength value - transverse strength value after durability test)/initial transverse strength value) × 100;

Transverse strength value (kgf/mm²) = (1.5×W×L)/B×H×H, where W: load (kg), L: span (mm), B: honeycomb width (mm), H: honeycomb height (mm).

Evaluation results of Examples 1 to 18, Comparative Examples 1, 2 and the reference example are shown in Table 1.

**Table 1**

| | Generation degree of crack | Transverse strength drop ratio (%) |
|---|---|---|
| Example 1 | 5 | 50 |
| Example 2 | 2 | 31 |
| Example 3 | 1 | 18 |
| Example 4 | 1 | 11 |
| Example 5 | 1 | 5 |
| Example 6 | 2 | 15 |
| Example 7 | 3 | 33 |
| Example 8 | 1 | 20 |
| Example 9 | 1 | 18 |
| Example 10 | 4 | 39 |
| Example 11 | 1 | 16 |
| Example 12 | 5 | 53 |
| Example 13 | 4 | 45 |
| Example 14 | 4 | 40 |
| Example 15 | 3 | 31 |
| Example 16 | 4 | 45 |
| Example 17 | 2 | 23 |
| Example 18 | 4 | 35 |
| Comparative Example 1 | 9 | 72 |
| Comparative Example 2 | 8 | 68 |
| Reference Example | 0 | 0 |

It is seen from Table 1 that when a pre-coat layer contains 30 (mass %) or more of titanium oxide (TiO₂), crack generation and strength drop can be inhibited. It is also seen that when the layer contains rutile type TiO₂, the crack generation and strength drop can be further inhibited.

### INDUSTRIAL APPLICABILITY

AS described above, the catalyst carrier of the present invention has the pre-coat layer containing at least 30 mass % of titanium oxide (TiO₂) on the surface of the ceramic substrate, so that a reaction of the substrate with alkali metal and/or alkaline earth metal can be inhibited when alkali metal and/or alkaline earth metal is loaded on the catalyst carrier. Therefore, the ceramic substrate shows less deterioration. Also, in the catalyst body of the present invention, the catalyst carrier having the pre-coat layer containing at least 30 mass % of titanium oxide (TiO₂) on the surface of the ceramic substrate is used, and catalyst containing both or either of alkali metal and alkaline earth metal is loaded on the carrier, so that it is possible to inhibit the catalyst from reacting with the ceramic substrate. Therefore, the ceramic substrate shows less deterioration.

## Claims

1. A catalyst carrier comprising:
a ceramic substrate composed mainly of ceramics; and
a pre-coat layer applied on the ceramic substrate,
wherein the pre-coat layer comprises titanium oxide (TiO₂) in an amount of at least 30 mass %.

2. The catalyst carrier according to claim 1, wherein at least a part of said TiO₂ is rutile type TiO₂.

3. The catalyst carrier according to claim 2, wherein a ratio of the rutile type TiO₂ to the whole TiO₂ is at least 50 mass %.

4. The catalyst carrier according to any of claims 1 to 3, wherein an amount of the pre-coat layer per unit volume of the catalyst carrier (amount of the pre-coat layer/volume of the catalyst carrier) is 5 to 200 g/liter.

5. The catalyst carrier according to any of claims 1 to 4, wherein the ceramics is cordierite.

6. The catalyst carrier according to any of claims 1 to 5, wherein the ceramic substrate is a honeycomb structure.

7. A catalyst body comprising: the catalyst carrier according to any one of clams 1 to 6; and alkali metal and/or alkaline earth metal loaded on the catalyst carrier.
